(19) Europäisches Patentamt

European Patent Office

Office européen des brevets

(11) **EP 1 166 644 A1**

(12) **EUROPEAN PATENT APPLICATION**

(43) Date of publication:
**02.01.2002 Bulletin 2002/01**

(51) Int Cl.⁷: **A23L 1/015**, A23L 1/211, A62D 3/00

(21) Application number: **00202279.6**

(22) Date of filing: **29.06.2000**

| (84) Designated Contracting States:<br>**AT BE CH CY DE DK ES FI FR GB GR IE IT LI LU MC NL PT SE**<br>Designated Extension States:<br>**AL LT LV MK RO SI** | (72) Inventors:<br>• **Juillerat, Marcel Alexandre**<br> **Vers-Chez-Les-Blancs, 1000 Lausanne 26 (CH)**<br>• **Bel Rhlid, Rachid**<br> **1066 Epalinges (CH)**<br>• **Talmon, Jean-Phillippe**<br> **1022 Chavannes (CH)** |
| (71) Applicant: **SOCIETE DES PRODUITS NESTLE S.A.**<br>**1800 Vevey (CH)** | • **Fay, Laurent Bernard**<br> **74500 Evian (FR)** |

(54) **Enzymatic biodegradation of halogenated compounds**

(57)    The use of a food-grade yeast as sole bioconversion agent, for aerobic enzymatic degradation of halogenated contaminants in a food substrate, wherein the yeast has the ability to achieve the bioconversion of said contaminants at the ppm (mg/kg) level or until the ppb (μg/kg) level.

EP 1 166 644 A1

**Description**

The present invention relates to the use of yeast as natural agent for dehalogenation of halogenated compounds in food substrate. It also relates to a bioconversion process for the degradation of halogenated compounds in food by using a yeast in appropriate conditions.

**Background of the invention**

3-Monochloro-1,2-propanediol (3-MCPD) is one of the numerous chlorinated contaminants collectively known as chloropropanols. The known occurrence of which has been confined to hydrolyzed vegetable proteins (HVP) and epoxy resins made from epichlorohydrin monomer. HVP is commonly manufactured by the hydrochloric acid hydrolysis of crude vegetable proteins such as soybean, rape seed meals and maize gluten. These protein sources typically contain residual lipids (triglycerides) and their reaction with hydrochloric acid produces chloropropanols (Velisek, 1980; Collier, 1991). Similar mechanisms have been proposed for the formation of 3-MCPD in other ingredients and processed foods.

Originally identified as a contaminant of the savory food ingredient, acid-hydrolyzed vegetable protein (acid-HVP) or hydrolyzed plant protein (HPP), 3-MCPD has since been found in several other foods and ingredients as result of processing, storage conditions or migration from certain food contact materials (i.e. packaging).

A toxicological review by the Scientific Committee for Foods (SCF) in 1995, concluded that 3-MCPD should be regarded as a genotoxic carcinogen whose levels of this contaminant in all foods and ingredients must reduced to the minimum detectable by the most sensitive method available.

Accordingly, several pathways for enzymatic degradation of halogenated compounds have been discovered. Redox enzymes are responsible for the replacement of the halogen by a hydrogen atom (reductive dehalogenation, Castro, C.E. et al. (1985). *Biochemistry* **24:** 204) and for oxidative degradation (Markus A. et al. (1984). *J. Bacteriol.* **160:** 618). Elimination of hydrogen halide leads to the formation of an alkene (Yoshida M. et al. (1985). *Pest. Biochem. Biophysiol.* **23**:1.), which is further degraded by oxidation.

Since all of these pathways proceed either with a loss of functional group or through a removal of a chirality center, they are of little use for the biocatalytic synthesis of organic compounds. On the other hand, the enzymecatalyzed formation of an epoxide from a halohydrin and the hydrolytic replacement of a halide by a hydroxyl functionality may take place in a stereospecific manner and are therefore also of synthetic interest.

To date, several microorganisms have been identified as sources of enzymes which catalyze the formation of epoxides from $\alpha,\beta$-halohydrins - halohydrin epoxidases. They are found in bacteria (*Flavobacteria, Corynebacteria,* and *Pseudomonas* sp.), fungi (*Caldariomyces fumago*), and algae (*Laurencia pacifica*).

For example, Castro C.E, et al. ((1968), *Biochemistry* **7**(9): 3213-3218) isolated a bacteria, a *Flavobacterium* sp., that converted chlorohydrin of allyl chloride and bromohydrins of allyl alcohol, and allyl bromide to their respective epoxides. Further studies with this microorganism demonstrated that not only chlorohydrins and bromohydrins but also iodohydrins could be converted to epoxides (Geigert J. *et al* (1982), *Applied & Environmental Microbiology,* Vol. **45,** No. 3, p 1148-1149).

Also, in Nakamura T. *et al.* (1991), *Agric. Biol. Chem* **55:** 1931-1933, an epoxide formation from a prochiral halohydrin proceeding in a stereoselective manner was achieved by employing *Corynebacterium* sp.

Degradation of various halogenated compounds with *Pseudomonas* sp. were described in Kasai N. *et al.* ((1990), *Agricultural Biology Chemistry,* **54** (12), p 3185-3190). The strain degraded various halohydrins and epoxides to the dehalogenated alcohols.

The use of other micro-organism such as yeast have already been associated with chemical treatments to reduce toxic chloro compounds or pesticides in industrial wastes or in food products.

Accordingly, WO 9941357 described the use of *Hansenula californica* strain NT (VKPM Y-2284) for digesting polychlorinated biphenyls (PCB) in PCB-contaminated soil, or industrial wastes. The PCB concentration in soil is only reduced by 35-50%.

Also, in SU 538703 chloro-organic pesticides such as DDT in fermented milk products are decomposed by pasteurising, cooling and inoculating with Saccharomyces yeasts and putting the milk oxide for at least 12-14h. A decomposition of pesticides is attained in 3 day products, e.g. Kefir.

Then, more recently, Bok-Man Yoon et *al.,* (1998, *Korean J. Food Sci. Technol.* **30**(2): 419-424) studied the changes of MCPD in soy sauce made of acid-hydrolysate of defatted soy protein by fermenting the soy sauce koji (*Aspergillus orrizae*). A significant reduction in MCPD concentration was observed with or without addition of *Pediococcus soya* or *Saccharomyces rouxii* to the fermenting soy-sauce.

Although it comes from the prior art that a large number of microorganism has been described as degradative tools for halogenic compounds, the prior art does not reveal any efficient food-grade specific halohydrin degradation of contaminated food substrates linked to the sole use of yeasts.

## Summary of the invention

Thus, the present invention relates to the use of a food-grade yeast as sole bioconversion agent, for aerobic enzymatic degradation of halogenated contaminants in a food substrate, wherein the yeast has the ability to achieve the bioconversion of said contaminants at the ppm (mg/kg) level or until the ppb (μg/kg) level.

The yeast can be any food-garde yeast selected from the group consisting of Ascomycotina or Deuteromycotina.

In a preferred embodiment, the yeast may be selected from the group consisting of *Debaryomyces, Kluyveromyces, Saccharomyces, Yarrowia, Zygosaccharomyces, Candida and Rhodutorula,* and more preferably *Saccharomyces caerevisae* (baker's yeast).

The bioconversion may be carried out at any temperature suitable for the yeast activity. The temperature is preferably of about at least 10°C. Moreover, the pH can be of at least 6 and preferably from 7 to 9. The yeast may be incubated for at least 10 hours and preferably from 24 to 80 hours.

In a preferred embodiment, the food-grade yeast is used for the bioconversion of chloropropanols. The yeast can be effective for food substrate having below 100 ppb of chloropropanols.

In a preferred embodiment, the yeast is used in the presence of an exogenous source of carbon such as glucose or saccharose, for example.

Food grade characteristics, ease of culture procedure and cheaper cost of yeast, comparatively to other microorganisms, present real advantages.

Another object is to provide a bioconversion process for the degradation of halogenated contaminants in a food substrate, which comprises inoculating the food substrate with a food grade yeast which has the ability to achieve the bioconversion of said contaminants at the ppm (mg/kg) level or until the ppb (μg/kg) level, and incubating the inoculated food substrate for at least 10 hours.

The yeast can be any food-garde yeast selected from the group consisting of Ascomycotina and Deuteromycotina.

In a preferred embodiment, the yeast may be selected from the group consisting of *Debaryomyces, Kluyveromyces, Saccharomyces, Yarrowia, Zygosaccharomyces, Candida and Rhodutorula*, and more preferably baker's yeast.

The degradation reaction may be carried out at a temperature of at least 10°C and preferably from 20 to 30°C, for example. The pH is preferably maintained at above 6, and most preferably between 7 to 9.

These biodegradation conditions allow to obtain the highest bioconversion of halogenated contaminants in food substrates, and particularly efficient for degradation of chloropropanols.

In a preferred embodiment, an exogenous source of carbon can be added to the food sustrate so as to the increase the enzymatic activity of the yeast and the rate of the bioconversion process.

One advantage of this process is to perform the biodegradation of 3-MCPD at the ppb level, since only microorganisms which are able to achieve the bioconversion of 3-MCPD at the ppb level could be effective for the treatment of protein hydrolysate (HPP) which contain between 100 and 150 ppb of 3-MCPD, for example.

## Detailed description of the invention

Within the following description, the terms "ppb" and "ppm" defines respectively part-per-billion and part-per-million.

With respect to the first object of the present invention, the use of a food-grade yeast as sole bioconversion agent, for aerobic enzymatic degradation of halogenated contaminants in a food substrate, wherein the yeast has the ability to achieve the bioconversion of said contaminants at the ppm level or until the ppb level, is concerned.

The yeast can be any food-garde yeast selected from the group consisting of Ascomycotina and Deuteromycotina.

In a preferred embodiment, the yeast may be selected from the group consisting of *Debaryomyces, Kluyveromyces, Saccharomyces, Yarrowia, Zygosaccharomyces, Candida and Rhodutorula*, and more preferably baker's yeast.

The yeast according to the invention can be used in the form of an active dry extract. The amount of the dry extract may be of at least 5g /100m1 of food substrate at the ppm level or until the ppb level. It is more preferably of from about 10 to 30g/100ml.

The yeast may be incubated for at least 10 hours at a pH and a temperature suitable for its activity. The yeast is preferably incubated from about 24 to 80 hours.

The yeast is preferably used at a pH above 6, and more preferably at a pH comprised between 7 to 9. The yeast may be used at a temperature of at least 10°C, and preferably at a temperature from 20 to 30°C.

In a preferred embodiment, the yeast is first allowed to grow on any medium suitable to increase biomass and develop enzymatic activity.

In a preferred embodiment, the yeast is particularly usefull for the degradation of chloropropanols such as 3-monochloro-1,2-propanediol (3-MCPD), for example. The enzyme system exhibited activity for degrading 3-MCPD with the liberation of chloride ions. The yeast may be baker's yeast, for example. Baker's yeast can achieve the degradation of chloropropanols such as 3-MCPD in a food substrate having below 100 ppb of said chloropropanols.

In a preferred embodiment, an exogenous source of carbon can be added to the food substrate. Accordingly, the source of carbon may be any ingredient that increases the activity of the yeast and the rate of the bioconversion. It can be glucose or saccharose, for example. The amount of the source of carbon which can be added depends on the composition and amount of the food substrate, the activity of the yeast and the conditions of reaction. It can thus be added in an amount sufficient for the yeast to degrade at least 50% of contaminants at the ppb level, at least 10 hours after inoculation.

The use of a yeast according to the invention allow high bioconversion rates of halogenated compounds. Moreover, food grade characteristics, ease of culture procedure and cheaper cost of baker's yeast, comparatively to other microorganisms, present real advantages.

Another object is to provide a bioconversion process for the degradation of halogenated contaminants in food substrate, which comprises inoculating the food substrate with a food grade yeast which has the ability to achieve the bioconversion of said contaminants at the ppm level or until the ppb level, and incubating the inoculated food substrate for at least 10 hours.

The yeast has the above described traits.

The degradation reaction may be carried out at a temperature of at least 10 °C and preferably from 20 to 30°C, for example. The pH is preferably maintained at above 6, and most preferably between 7 to 9.

In a preferred embodiment, the yeast is first allowed to grow on any medium suitable to increase biomass and develop enzymatic activity.

In a preferred embodiment, an exogenous source of carbon can be added to the food substrate, as described above.

A main advantage of this process is for example, to perform the biodegradation of 3-MCPD at the ppb level, since only microorganisms which are able to achieve the bioconversion of 3-MCPD at the ppb level could be effective for the treatment of protein hydrolysate (HPP) which contain between 100 and 150 ppb of 3-MCPD or even below 100 ppb of 3-MCPD, for example.

The following examples are given by way of illustration only and in no way should be construed as limiting the subject matter of the present application. All percentages are given by weight unless otherwise indicated. The examples are preceded by a brief description of the figures.

## Figures

Figure 1: Effect of pH on biodegradation assays of 3-MCPD with baker's yeast.
Figure 2: Chloride production and 3-MCPD degradation with yeast at pH 7.0
Figure 3: Chloride production and 3-MCPD degradation with yeast at pH 8.2.
Figure 4: Effect of glucose on biodegradation of 3-MCPD with yeast at pH 8.2
Figure 5: Stereoselectivity study of 3-MCPD bioconversion by baker's yeast at pH 8.2.
Figure 6: Effect of substate concentration on bioconversion by yeast at pH 8.2

## Examples

## Example 1: Dehalogenation of 3-MCPD with baker's yeast

MATERIAL AND METHODS

## Chemicals and Microorganisms

The solvents used in the present study were: ethyl acetate, isooctane, and methanol. All reagents were of analytical grade. 3-Monochloro-1,2-propanediol (3-MCPD), (S)-(+)-3-monochloro-1,2-propanediol, and (R)-(-)-3-monochloro-1,2-propanediol were purchased from Aldrich (Steinheim, Germany). Sodium chloride, anhydrous sodium sulfate, anhydrous glucose, nitric acid (min. 65%), and silver nitrate have been obtained from Merck (Dietikon, Switzerland). $d_5$-3-Monochloro-1,2-propanediol ($d_5$-3-MCPD) was kindly provided by Nestlé (CRN, Lausanne, Switzerland). 3-Monochloro-1-propanol (3-MCP) was obtained from Fluka (Buchs, Switzerland). Heptafluorobutyrylimidazole (HFBI) was obtained from Pierce (Rockford, Illinois, USA). Active dry baker's yeast was purchased from Hefe Schweiz (Stettfurt, Switzerland).

Biodegradation assays were carried out according to the following steps:

**Step 1.** *Culture of microorganisms*: The microorganisms studied were allowed to grow on a defined medium, in order to increase biomass and develop possible enzymatic activity.

**Step 2.** *Bioconversion assay:* The desired amount of 3-MCPD was added to the reactor, and samples were withdrawn at different reaction time to follow the kinetics of biodegradation.

**Step 3.** *Centrifugation*: Samples withdrawn from the mixture were centrifuged, the pellet was discarded and the supernatant was used for further treatment and analysis.

**Step 4.** *Extraction of 3-MCPD:* 3-MCPD was extracted from the supernatant using Extrelut columns or the Accelerated Solvent Extractor method, and partitioned into ethyl acetate.

**Step 5.** *Preparation of samples for analysis:* The organic phase was concentrated with a rotary evaporator, and transferred to a vial, containing an internal standard (3-monochloro-1-propanol (3-MCP) or 3-MCPD-$d_5$).

**Step 6.** *Analysis:* Final detection and monitoring of substrate was accomplished by gas chromatography techniques (GC or GC-MS).

**Extraction methods**

*Extrelut columns*

Extrelut consists of a specially processed wide-pore diatomaceous earth of high pore volume. The kieselguhr matrix of Extrelut is chemically inert and can be used at all pH. The capacity of these disposable columns for aqueous samples is defined by the designation of the product. Thus, Extrelut 1 columns can take up a maximum of 1 ml of aqueous sample, and Extrelut 3 columns, three ml. Furthermore, Extrelut 1 and Extrelut 3 are available as glass columns, which was particularly recommended if high degrees of purity are to be maintained with respect to subsequent analyses. The aqueous sample is applied to the Extrelut sorbent. It distributes itself in the form of a thin film over the chemically inert silica matrix and thus acts as a stationary phase. Subsequently, elution takes place using organic solvents that are non-miscible with water, solvents like diethyl ether, ethyl acetate or halogenated hydrocarbons. All the lipophilic substances are extracted from the aqueous phase. During this process, the aqueous phase remains on the stationary phase. The eluate is free from emulsions and can be evaporated for further analysis.

To determine the recovery efficiency of the Extrelut columns, two series of extraction assays, with a stock solution of 3-MCPD, were performed on both type of column (Extrelut 1 and Extrelut 3) with three different volumes of eluant (ethyl acetate). In addition, the influence of 3-MCPD concentration on recovery efficiency was also tested.

Results demonstrated that the best recovery could be achieved with Extrelut 3 columns, that 3-MCPD level had no effect on the column efficiency, and that less than 5% deviation was observed between the repeated extractions. Thus, recovery of 88% 3-MCPD could be achieved when the column was eluted with 50ml of ethyl acetate.

*Accelerated Solvent Extractor (ASE)*

The Dionex 200 Accelerated Solvent Extractor (ASE) with a programmable solvent selection and computer control was used. The extraction principle is similar to the Extrelut columns. The only difference in the extraction method is that extraction is accelerated by using solvents at elevated temperature and pressure. Increased temperature accelerates the extraction rate, while elevated pressure keeps the solvent below its boiling point, thus enabling safe and rapid extractions. Both time and solvent consumption are dramatically reduced compared to Soxhlet and sonication techniques. Thus, the ASE 200 can extract 10 g sample in less than 15 minutes with only 15 ml of solvent.

To determine the recovery efficiency of the ASE, extraction assays with several concentration of stock solution of 3-MCPD were performed. In addition, the influence of some operating conditions (such as temperature, static time, and static cycle) on recovery efficiency were also tested.

The results have demonstrated that 3-MCPD level had no effect on the efficiency of the method, and that recovery of 91% 3-MCPD could be achieved with less than 4% standard deviation. The operating conditions (as defined in the schedule of the ASE-software) were the following:

| Pressure | 11 bar Static time : 10 min |
|---|---|

(continued)

| Temperature | 25°C Flush volume: 100% |
| --- | --- |
| Heat time | 1 min Static cycle : 1 |
| Purge time | 60 s Preheat time : 0 |
| Solvent | 100% ethyl acetate |

**Analytical measurements**

Samples of the reaction mixtures were analyzed, by gas chromatography for concentration of 3-MCPD at the ppm (mg/kg) level, or by gas chromatography - mass spectrometry for 3-MCPD at the ppb (μg/kg) level.

*Gas chromatography*

Gas chromatography has been used for routine quantification of 3-MCPD, using 3-MCP as internal standard. Detection limit of the method was 10 ppm. Therefore, it was used for analysis of all the samples harvested from biodegradation studies using 2000 ppm or 3000 ppm initial concentration of 3-MCPD. The samples obtained were analyzed using Hewlett-Packard Model HP5890 gas chromatograph, with a capillary column DB-WAX (30 meters, diameter 0.32 mm, film 0.25 μm), equipped with a Split/Splitless injector, an autosampler 7673A, and a flame ionization detector (FID). The oven temperature program was: 20°C for 1 min, 70°C/min to 60°C, then 4°C/min to 220°C, hold 10 min. The samples were injected on splitless mode, and the volume injected was 1 μl. Injection and detector temperatures were set to 250°C.

*Preparation of standards*: A stock solution of 3-MCP was prepared by weighting 100 mg into a 100 ml volumetric flask and making up to the required volume with ethyl acetate. This stock solution was diluted twice with ethyl acetate (1:10 v/v) to obtain a stock solution with a concentration of 2000 ppm. Calibration solutions covering the range of 200 to 5000 ppm were prepared by serial dilution of the stock solution with ethyl acetate, as appropriate. A stock solution of 3-MCPD was prepared by weighting 100 mg into a 100 ml volumetric flask and making up to the required volume with ethyl acetate. Spiking solution with concentration of 2000 ppm was prepared by serial dilution of the stock solution with ethyl acetate as appropriate. These solutions were used to spike samples in the range 200-5000 mg/kg (ppm). The stock solutions, and calibrating solutions were kept refrigerated (4°C) and were prepared every two months.

*Calibration curve:* Standards with 3-MCPD levels between 200 and 5000 mg/kg were analyzed by GC to determine linearity. The calibration curve was made by plotting the ratio of 3-MCPD/3-MCP peak area versus the ratio of 3-MCPD/3-MCP concentration (ppm). Linearity was observed for the 3-MCPD concentration range studied.

*Determination of 3-MCPD concentration:* The amount of 3-MCPD ($W_i$) in concentrated sample extracts was calculated using the calibration curve with the following equation:

$$\frac{A_i}{A_S} = \frac{r_S}{r_i} \cdot \frac{W_i}{W_S}$$

with

| $A_i$ | internal standard peak area |
| --- | --- |
| $A_S$ | substrate (3-MCPD) peak area |
| $r_S$ | response factor of substrate |
| $r_i$ | response factor of internal standard |
| $W_i$ | amount of internal standard added (ppm) |
| $W_S$ | amount of substrate analyzed (ppm) |

The ratio of the peak area response factor for 3-MCPD to the peak area response factor for the ISTD ($r_s/r_i$) was given from the calibration curve. The ratio of 3-MCPD peak area/internal standard peak area ($A_s/A_i$) was given from the gas chromatography analysis, and the amount of internal standard ($W_s$) added was known. Results were expressed as mg/kg (ppm).

### Gas chromatography - mass spectrometry

Gas chromatography - mass spectrometry was used for detecting ppb ($\mu$g/kg) levels of 3-MCPD using $d_5$-3-chloro-1,2-propanediol ($d_5$-3-MCPD) as internal standard. Detection limits of 10 ppb was obtained for Heptafluorobutyrylimidazole (HBFI) derivatives of 3-MCPD. Therefore, it was used for analysis of all the samples harvested from the kinetic study with 800 ppb initial concentration of 3-MCPD. Samples were analyzed using Finnigan MAT-8430 gas chromatograph-mass spectrometer with a capillary column DB-5MS (30 meters, diameter 0.32 mm, film 0.25 $\mu$m), equipped with a Split/Splitless injector, and an autosampler 7673A. The oven temperature program was: 50°C for 1min, 5°C/min to 100°C, then 30°C/min to 300°C, hold 2 min. The samples were injected in splitless mode, and the volume injected was 2$\mu$l. Injection temperature was set at 260°C, and transfer line temperature at 220°C. Electron Ionization (EI), 70eV, was used with selected ion monitoring. Ion source was set at 180°C.

*Preparation of internal (ISTD) standards:* 50 mg of 3-MCPD-$d_5$ was weighted and transferred quantitatively to a 50 ml volumetric flask and made up to volume with ethyl acetate (stock ISTD, 1 mg/ml). The stock was serially diluted with ethyl acetate to give a calibration working ISTD at 2.5 $\mu$g/ml. A 0.5ml aliquot of the stock ISTD was transferred to a 50ml volumetric flask and made up to volume with methanol to give a sample working ISTD at 10 $\mu$g/ml.

*Preparation of standards for calibration*: 100 mg of 3-MCPD was weighted into a 100 ml volumetric flask and made up to volume with ethyl acetate (stock 3-MCPD at 1 mg/ml). The stock 3-MCPD was serially diluted with ethyl acetate to give working standards at 10, 1, and 0.1 $\mu$g/ml. Aliquots of each working standard together with 5 ml of the 2.5 $\mu$g/ml working ISTD were transferred to 50 ml volumetric flask to give calibration standards at 5, 10, 25, 50, and 100 ng/ml, each with an ISTD concentration of 250 ng/ml; each flask was made up to volume with hexane. An aliquot of the stock 3-MCPD solution was diluted with methanol to give spiking standard at 10 $\mu$g/ml.

*Derivatization with Heptafluorobutyrylimidazole (HFBI):* One ml of the sample extract was transferred to a 4 ml septum cap vial. The solution was evaporated just to dryness under a gentle stream of nitrogen (on a Multi-Blok, LAB-LINE instrument), before adding 1ml of isooctane. A 50 $\mu$g/ml aliquot of HFBI (gas-tight syringe) was added and the vial was closed tightly with a teflon-coated cap. The vial was shaken using a vortex mixer for a few seconds and heated at 70°C for 20 minutes. 2ml of deionized water was added and shaken vigorously for 30 seconds. After centrifugation at 4000 rpm during 5 minutes (Sigma 3K12, Merk centrifuge), the upper layer (ethyl acetate) was removed and dried over anhydrous sodium sulfate and transferred to a 1.1 ml autosampler vial for GC-MS analysis.

*Calibration curve & 3-MCPD determination*: The calibration curve was plotted as previously described, after derivatization of the calibration standard solutions. 3-MCPD level was calculated using the same equation and method previously described, with $d_5$-3-MCPD used as internal standard. Results were expressed as $\mu$g/kg (ppb).

### Bioconversion assays with baker's yeast

*Conditioning of baker's yeast:* 60g active dry baker's yeast was added to 300 g distilled water under magnetic stirring for 20 min at room temperature. The yeast cream was then centrifuged at 5000 rpm for 15 min, at 4°C (Beckman Model J2-21M Centrifuge) and supernatant was discarded. The pellet was resuspended in equivalent amount (225ml) of distilled water. The obtained yeast cream solution (pH 5.8) was then used for bioconversion assays.

*Bioconversion assay:* 150 g of the yeast cream solution obtained as described above was placed in a 200 ml reactor vessel equipped with an electrode and a magnetic stirrer (500 rpm). The flask was kept at 28°C using an oil bath equipped with a thermostat (Heidolph MR 3003), and pH was adjusted to the desired pH condition (pH 6.2, pH 7.0, or pH 8.2) with 2M NaOH solution.

350$\mu$l (3000 ppm) or 0.1$\mu$l (800 ppb) racemic 3-MCPD was added to the reactor. The pH was automatically maintained throughout the reaction with regular adjunction of 2M NaOH (Metrohm 691 pH-Meter, equipped with Metrohm Impulsomat 614 and Dosimat 665).

Aliquots of 6 ml were withdrawn from the reaction mixture at different incubation times and centrifuged at 3000 rpm, during 4 min, at 25°C (Beckman Model TJ6 Centrifuge). The pellet was discarded, and the supernatant absorbed onto an Extrelut 3 column or hydromatrix column (placed in the Accelerated Solvent Extractor). 3-MCPD was then partitioned into ethyl acetate, volume was reduced to 2 ml by rotary evaporation, and transferred to a 10 ml graduated tube. 1ml of the internal standard (3-MCP or 3-MCPD-$d_5$) was added to the vial and made up to volume with ethyl acetate. Finally, the extract was dried over anhydrous sodium sulfate, and analyzed for 3-MCPD content by gas chromatography (GC or GC-MS).

The study of 3-MCPD biodegradation by baker's yeast was made by varying different parameters and measuring their influence on the yield and rate of 3-MCPD degradation. The effect of the following parameters were studied:

- pH 6.2, 7.0 and 8.2
- presence of glucose in the reaction mixture
- substrate stereospecificity: (*R*)-and (*S*)-enantiomers

- substrate concentration: 800 ppb and 3000 ppm

For all bioconversion assays, the NaOH adjonction profile was recorded.

**Chloride titration**

Chloride titration assays were carried out on samples withdrawn at different reaction times during bioconversion assays by direct potentiometric titration by means of a silver electrode and a standard silver nitrate solution. Each sample withdrawn from the mixture was centrifuged at 3000 rpm, during 5 min, and at 25°C (Beckman Model TJ 6 Centrifuge). Supernatant (3 ml) was transferred to a 100ml volumetric flask, which was made up to volume with distilled water. An aliquot of 40ml of this solution was transferred into a titration vessel, 1 ml concentrated nitric acid was added. The pH of the solution was checked to lie below 1.5 by means of a pH-meter, and, if necessary, more nitric acid was added.

Under continuous stirring, titration with the 0,01 N $AgNO_3$ solution was carried out. The titrant was added in large increments at the outset and in smaller and smaller increments as the end point is approached (as indicated by larger changes in response per unit volume).

The titration method has been performed with an automatic titrator (Combi-titrator Metrohm, including Impulsomat 614, piston burette Multi-Dosimat 645 with stirrer and Dosigraph 625).

A Potentiometric end point was obtained by calculating the change in potential per unit volume of titrant ($\Delta E/\Delta V$). A plot of these data as a function of the average volume V produced a curve with a maximum that corresponded to the point of inflection. This method of end-point evaluation is predicted on the assumption that the titration curve is symmetric about the equivalence point and that the inflection in the curve corresponds to this point. This assumption is perfectly valid, if the participants in the titration react in an equimolar ratio, and if the reaction taking place at the electrode is perfectly reversible.

RESULTS

The results of the biodegradation assays are reported as a percentage of conversion of 3-MCPD as function of reaction time.

Final conversion values were referred to 48h reaction time in order to compare the different biodegradation assays performed. Comparison of bioconversions after 48 h reaction time has been chosen in respect of the enzymatic nature of the reaction studied (many non-enzymatic reactions could occur in a longer time frame).

A control vial (reaction medium with substrate, but without microorganism) was run alongside the reaction. This control permitted the subtraction of the non-enzymatic conversion of 3-MCPD under the experimental conditions tested.

**Effect of pH on bioconversion with baker's yeast**

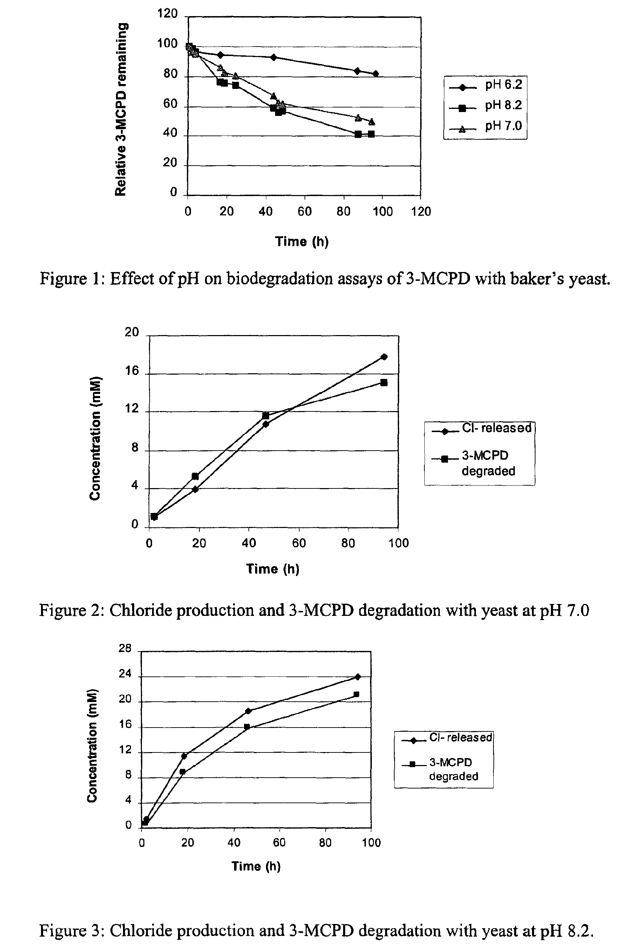

The effect of the pH on the reaction rate and on the biodegradation of 3-MCPD was studied. Bioconversions were performed at three different pHs (6.2, 7.0 and 8.2) using racemic 3-MCPD at the ppm level (3000 ppm). All the reactions were carried out at 28°C, and without any additional carbon source (without glucose). Results are reported in Figure 1.

As can be seen in Figure 1, degradation of 3-MCPD took place at all pH values studied, but was maximal at pH 8.2. In fact, 45% conversion was achieved after 48 h reaction time at pH 8.2, versus only 35% and 12% conversion were observed at pH 7.0 and 6.2 respectively. The control showed less than 4% conversion in the same time.

Biodegradation assays at pH 7.0 and pH 8.2 were repeated under the same reaction conditions, and with the same initial concentration of racemic 3-MCPD. Results showed a good reproducibility of the experiments. Consequently, pH 8.2 was chosen for all the following biodegradations performed with baker's yeast.

**Chloride Titration**

To confirm the degradation of 3-MCPD with yeast cells, the amount of chloride ($Cl^-$) released in the reaction was compared to the amount of 3-MCPD degraded.

Thus, potentiometric titrations of chloride were performed on several samples withdrawn from the previous biodegradation assays at pH 7.0 and pH 8.2. Typical over-all kinetics for consumption of 3-MCPD and release of chloride in the reaction medium are reported in Figures 2 and 3.

As shown in Figures 2 and 3, the bioconversion exhibited 3-MCPD degradation in the same relative proportions to chlorinating activity. Therefore, on the basis of a stochiometric mol to mol degradation, it was confirmed that the amount of chloride released in the reaction was comparable to the amount of 3-MCPD converted.

**Stereoselectivity study**

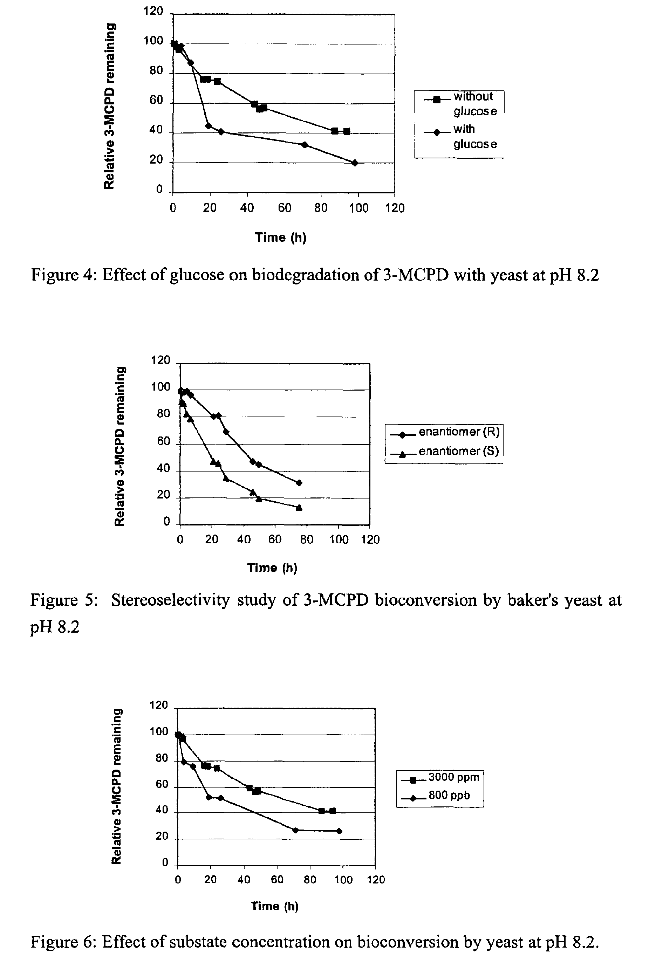

Since the conversion yield of racemic 3-MCPD obtained after 48 h reaction time, at pH 8.2, was about 50% (Figure 1), the hypothesis of an enantioselective biodegradation with baker's yeast was established. Therefore, in order to evaluate the stereoselectivity of the enzymatic system involved degradation of pure (*R*)- and (*S*)-enantiomers were carried out at pH 8.2 (Figure 5).

Results showed that the (*S*)-enantiomer was degraded in higher rate and percentage comparatively to the (*R*)-enantiomer. In fact, 85% conversion of (*S*)-3-MCPD was obtained after 48 h, whereas only 60% could be achieved with (*R*)-3-MCPD after the same reaction time.

Two assumptions can be made to explain these observations. The first one, is that only one enzyme is involved in the biodegradtion process, presenting a kinetic preference towards the (*S*)-enantiomer. The second one, is that two enzymes are involved in the process degrading specifically each enantiomer individually with different conversion rates.

**Effect of substrate concentration**

One aim of the invention is to perform the biodegradation of 3-MCPD at the ppb level, since only microorganisms which are able to achieve the bioconversion of 3-MCPD at the ppb level could be effective for the treatment of protein hydrolysate (HPP) which contain between 100 and 150 ppb of 3-MCPD.

Therefore, in order to determine if biodegradation is affected by 3-MCPD concentration, a bioconversion with initial substrate level of 800 ppb was carried out at pH 8.2 and compared to the previous biodegradation at the ppm level and under the same conditions. The experiment was conducted using the racemic mixture of 3-MCPD, at 28°C, and without glucose (Figure 6).

The results showed that not only biodegradation of 3-MCPD was observed, but moreover, that conversion rate and yield achieved were much higher with 3-MCPD at the ppb level. In fact, 70% conversion of 3-MCPD at the ppb level was obtained after 48 h reaction, whereas only 45% could be achieved with the substrate at the ppm level.

**Summary of results**

The following table 1 summarizes biodegradation yields achieved with the yeast as function of reaction time.

Table 1:

| Biodegradation of 3-MCPD (3000 ppm) with baker's yeast as function of the reaction time. | | |
|---|---|---|
| ***Baker's yeast*** | ***After 24 h*** | ***After 48 h*** |
| (R,S)-3-MCPD pH 6.2 | 8 % | 12 % |
| (R,S)-3-MCPD pH 7.0 | 20 % | 35 % |
| (R,S)-3-MCPD pH 8.2 | 26 % | 45 % |
| (R,S)-3-MCPD (800 ppb) | 50 % | 70 % |
| (R)-3-MCPD pH 8.2 | 20 % | 60 % |
| (S)-3-MCPD pH 8.2 | 55 % | 85 % |
| Control pH 8.2 | 2 % | 4 % |

The enzymatic system exhibited activity for converting 3-MCPD with the liberation of chloride ions under aerobic conditions at 28°C.

Finally, substrate concentration at the ppb level positively affected the biodegradation potential of baker's yeast cells towards 3-MCPD. Thus, after 24h reaction time, at pH 8.2, conversion of racemic 3-MCPD at 800 ppb of about 50% was achieved.

**Example 2 : Bioconversion in presence of glucose**

Biodegradations assays were carried out in the presence of an exogenous source of carbon (glucose) in the same conditions as described in example 1.

It can be noticed from all bioconversion assays performed previously, that the degradation of 3-MCPD was taking place over a very long time period. From this observation, one may assume that the substrate was simply assimilated by the microorganism as energy source for its metabolism, instead of being degraded enzymatically. In order to eliminate that assumption, biodegradation of 3-MCPD was carried out with the presence of glucose. Small amounts of glucose were added to the reaction mixture at regular time intervals, to maintain an excess of carbon source.

The results are presented in Figure 4, and are compared to the previous biodegradation assay performed under identical experimental conditions but without glucose. Arrows indicate adjunction times of 1g of glucose in the reaction mixture.

The addition of glucose to the mixture resulted in an enhancement of 3-MCPD degradation rate and yield. Thus, 68% of 3-MCPD were transformed after 48 h reaction in presence of glucose, whereas only 45% conversion could be achieved previously in absence of glucose. Furthermore, no significant increase of biomass was observed.

Glucose positively affects the biotransformation potential of baker's yeast cells towards 3-MCPD. Moreover, this experiment combined with the previous chloride titration demonstrated that the degradation of 3-MCPD was only due to enzymatic activity.

The following table 2 summarizes biodegradation yields achieved with the yeast as function of reaction time.

Table 2:

| Biodegradation of 3-MCPD (3000 ppm) with baker's yeast as function of the reaction time. | | |
| --- | --- | --- |
| *Baker's yeast* | *After 24 h* | *After 48 h* |
| (R,S)-3-MCPD pH 8.2 | 26 % | 45 % |
| (R,S)-3-MCPD pH 8.2 + glucose | 60 % | 68 % |
| Control pH 8.2 | 2 % | 4 % |

In the presence of glucose, biodegradation of 3-MCPD provided an enhancement of the reaction rate. Thus, the highest conversion obtained with racemic 3-MCPD at 2000 ppm was 60% after 24h reaction, at pH 8.2, in the presence of glucose.

**Example 3**

About 100 kg of corn gluten containing about 60% protein is hydrolysed with about 180 kg of about 20% hydrochloric acid at about 120°C for about 7 hours which provides a hydrolysed plant protein ("HPP") feed seasonning.

The HPP has a 3-MCPD content of about 40 ppb, and the contaminant content is reduced by inoculating the HPP with about 150g of yeast cream (30 g of active dry baker's yeast from Hefe Schweiz (Stettfurt, Switzerland)) in the presence of glucose (1 g ). The inoculated HPP is incubated at a pH of about 8.2 and at a temperature of about 28°C during from 5 to 46 hours.

The content of 3-MCPD is measured in the HPP after incubation. The final amount of 3-MCPD is of about 13+/- 10 ppb.

**Claims**

1. The use of a food-grade yeast as sole bioconversion agent, for aerobic enzymatic degradation of halogenated contaminants in a food substrate, wherein the yeast has the ability to achieve the bioconversion of said contaminants at the ppm (mg/kg) level or until the ppb (µg/kg) level.

2. The use according to claim 1, wherein the yeast is selected from the group consisting of Ascomycotina and Deuteromycotina.

3. The use according to claim 1 or 2, wherein the yeast is selected from the group consisting of *Debaryomyces, Kluyveromyces, Saccharomyces, Yarrowia, Zygosaccharomyces, Candida and Rhodutorula.*

4. The use according to one of claims 1 to 3, wherein the yeast is baker's yeast.

5. The use according to claim 4, in which baker's yeast is able to achieve the degradation of chloropropanols such as 3-MCPD in a food substrate having below 100 ppb of said chloropropanols.

**6.** The use according to one of claims 1 to 5, in which the yeast is incubated at least 10 hours at a temperature and a pH suitable for its activity.

**7.** The use according to claim 5, in which the pH is above 6, and preferably from 7 to 9.

**8.** The use according to claim 6 or 7, in which the temperature is of at least 10°C, and preferably 20 to 30°C.

**9.** The use according to one of claims 1 to 8, in which the yeast is used in the presence of an exogenous source of carbon in an amount sufficient to increase the enzymatic activity of the yeast.

**10.** A bioconversion process for the degradation of halogenated contaminants in food substrate, which comprises inoculating the food substrate with a food grade yeast which has the ability to achieve the bioconversion of said contaminants at the ppm (mg/kg) level or until the ppb (μg/kg) level, and incubating the inoculated food substrate for at least 10 hours at a temperature and a pH suitable for its activity.

**11.** A bioconversion process according to claim 10, wherein the yeast is selected from the group consisting of Ascomycotina and Deuteromycotina.

**12.** A bioconversion process according to claim 10 or 11, wherein the yeast is selected from the group consisting of *Debaryomyces, Kluyveromyces, Saccharomyces, Yarrowia, Zygosaccharomyces, Candida and Rhodutorula.*

**13.** A bioconversion process according to one of claims 10 to 12, in which the yeast is baker's yeast.

**14.** A bioconversion process according to claim 13, in which baker's yeast is able to achieve the degradation of chloropropanols such as 3-MCPD in a food substrate having below 100 ppb of said chloropropanols.

**15.** A bioconversion process according to one of claims 10 to 14, in which the yeast is incubated at a temperature of at least 10°C, and preferably from 20°C to 30°C.

**16.** A bioconversion process according to one of claims 10 to 15, in which the yeast is incubated at a pH above 6, and preferably from 7 to 9.

**17.** A bioconversion process according to one of claims 10 to 16, in which the yeast is used in the presence of an exogenous source of carbon in an amount sufficient to increase the enzymatic activity of the yeast.

Figure 1: Effect of pH on biodegradation assays of 3-MCPD with baker's yeast.

Figure 2: Chloride production and 3-MCPD degradation with yeast at pH 7.0

Figure 3: Chloride production and 3-MCPD degradation with yeast at pH 8.2.

Figure 4: Effect of glucose on biodegradation of 3-MCPD with yeast at pH 8.2

Figure 5: Stereoselectivity study of 3-MCPD bioconversion by baker's yeast at pH 8.2

Figure 6: Effect of substate concentration on bioconversion by yeast at pH 8.2.

EP 1 166 644 A1

**European Patent Office**

**EUROPEAN SEARCH REPORT**

Application Number

EP 00 20 2279

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DATABASE WPI<br>Section Ch, Week 198837<br>Derwent Publications Ltd., London, GB;<br>Class B05, AN 1988-260394<br>XP002153312<br>& JP 63 188392 A (KYOWA HAKKO KOGYO KK),<br>3 August 1988 (1988-08-03)<br>* abstract * | 10-17 | A23L1/015<br>A23L1/211<br>A62D3/00 |
| X | DATABASE WPI<br>Section Ch, Week 198702<br>Derwent Publications Ltd., London, GB;<br>Class B05, AN 1987-010768<br>XP002153313<br>& JP 61 268197 A (KANEGAFUCHI CHEM KK),<br>27 November 1986 (1986-11-27)<br>* abstract * | 10-17 | |
| A | PATENT ABSTRACTS OF JAPAN<br>vol. 011, no. 349 (C-456),<br>14 November 1987 (1987-11-14)<br>& JP 62 122597 A (KANEGAFUCHI CHEM IND CO<br>LTD), 3 June 1987 (1987-06-03)<br>* abstract * | | |
| A | DATABASE WPI<br>Section Ch, Week 199942<br>Derwent Publications Ltd., London, GB;<br>Class B05, AN 1992-147293<br>XP002153314<br>& JP 02 946054 B (NITTO CHEM IND CO LTD),<br>6 September 1999 (1999-09-06)<br>* abstract * | | TECHNICAL FIELDS SEARCHED (Int.Cl.7)<br><br>A23L<br>A62D |

The present search report has been drawn up for all claims

| Place of search | Date of completion of the search | Examiner |
|---|---|---|
| THE HAGUE | 20 November 2000 | Dalkafouki, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14

## ANNEX TO THE EUROPEAN SEARCH REPORT
## ON EUROPEAN PATENT APPLICATION NO.

EP 00 20 2279

This annex lists the patent family members relating to the patent documents cited in the above-mentioned European search report.
The members are as contained in the European Patent Office EDP file on
The European Patent Office is in no way liable for these particulars which are merely given for the purpose of information.

20-11-2000

| Patent document cited in search report | | Publication date | Patent family member(s) | | Publication date |
|---|---|---|---|---|---|
| JP 63188392 | A | 03-08-1988 | NONE | | |
| JP 61268197 | A | 27-11-1986 | NONE | | |
| JP 62122597 | A | 03-06-1987 | JP | 1810509 C | 27-12-1993 |
| | | | JP | 5020072 B | 18-03-1993 |
| | | | CA | 1338723 A | 19-11-1996 |
| | | | DE | 3680187 D | 14-08-1991 |
| | | | EP | 0224246 A | 03-06-1987 |
| | | | US | 5017484 A | 21-05-1991 |
| JP 2946054 | B | 23-03-1992 | JP | 4088989 A | 23-03-1992 |

For more details about this annex : see Official Journal of the European Patent Office, No. 12/82